# EUROPÄISCHE PATENTSCHRIFT

(11) **EP 1 391 001 B1**
(45) Veröffentlichungstag und Bekanntmachung des Hinweises auf die Patenterteilung: **15.09.2004**
(21) Anmeldenummer: 01271666.8
(22) Anmeldetag: 07.12.2001
(51) Int. Cl.: H01M 8/10

(54) **VERFAHREN ZUR DOPPELSEITIGEN BESCHICHTUNG EINER MEMBRAN-ELEKTRODEN-EINHEIT MIT KATALYSATOR**
METHOD FOR COATING BOTH SIDES OF A MEMBRANE-ELECTRODE ASSEMBLY WITH A CATALYST
PROCEDE DE RECOUVREMENT SUR DEUX FACES D'UN ENSEMBLE MEMBRANE-ELECTRODES AVEC UN CATALYSEUR

(30) Priorität: 21.12.2000 DE 10063741
(43) Veröffentlichungstag der Anmeldung: 25.02.2004
(73) Patentinhaber: FORSCHUNGSZENTRUM JÜLICH GMBH, 52425 Jülich (DE)
(72) Erfinder: WIPPERMANN, Klaus, 52428 Jülich (DE); DIVISEK, Jiri, 52428 Jülich (DE)
(86) Internationale Anmeldenummer: PCT/DE2001/004654
(87) Internationale Veröffentlichungsnummer: WO 2002/050932

(56) Entgegenhaltungen:
- DE-C- 19 720 688
- CHOI K H ET AL: "Electrode fabrication for proton exchange membrane fuel cells by pulse electrodeposition" JOURNAL OF POWER SOURCES, ELSEVIER SEQUOIA S.A. LAUSANNE, CH, Bd. 75, Nr. 2, 1. Oktober 1998 (1998-10-01), Seiten 230-235, XP004147195 ISSN: 0378-7753

## Beschreibung

### Technisches Gebiet

Die Erfindung betrifft ein Verfahren zur doppelseitigen Beschichtung einer Membran-Elektroden-Einheit mit Katalysator in einem Verfahrensschritt.

### Stand der Technik

Eine Membran-Elektroden-Einheit (MEA), die aus sandwichartig angeordneten Schichten Elektrode/Membran/Elektrode zusammengesetzt ist, stellt das zentrale Element u.a. einer Brennstoffzelle dar. Für Brennstoffzellen, deren Betriebstemperaturen 0 bis 150 °C betragen, werden ionenleitende Festelektrolyt-Membranen auf Polymerbasis verwendet. Die Anode für die Wasserstoffoxidation und die Kathode für die Sauerstoffreduktion ist vorwiegend mit Platin belegt. Die Anode für die Methanoloxidation der Direkt-Methanol-Brennstoffzelle (DMFC) ist beispielsweise mit Platin-Ruthenium belegt.

Das Prinzip einer Brennstoffzelle ist aus der Druckschrift "K. Kordesch, G. Simander: Fuel Cells and their Applications, VCH Weinheim, 1996", bekannt.
Es werden dort ferner verschiedene Verfahren zur Herstellung von Membran-Elektroden-Einheiten (MEA) für Brennstoffzellen beschrieben. Die katalytisch aktive Schicht befindet sich danach an der Phasengrenze zwischen der Gasdiffusionsschicht (backing layer) und dem Polymerelektrolyten.

Die Aufbringung des Katalysators kann typischerweise auf zwei Wegen erfolgen:
Einerseits kann die Elektrode durch Auftragen einer dünnen Platinschicht oder eines kohlenstoffgeträgerten Platinkatalysators auf die Diffusionsschicht der Gasdiffusionselektrode aufgebracht werden (J. Power Sources 22 (1988) 359; J. Electrochem. Soc. 135 (1988) 2209; Electrochimica Acta 38 (1993) 1661).
Andererseits kann die Katalysatorschicht auf die Membran aufgebracht werden, wie es zum erstenmal z. B. im US Patent 3,297,484 dargestellt wurde. Eine ausführliche Darstellung unterschiedlicher Beschichtungsverfahren befindet sich in der Druckschrift "Advances in Electrochemical Science and Technology, Volume 5, R.C. Alkire, (ed.), Wiley-VCH Verlag, Weinheim, 1997".
Die meisten der nach diesen Verfahren hergestellten katalytischen Schichten weisen eine relativ hohe Katalysatorbelegung mit dem Edelmetall auf, so daß insbesondere für eine Membran-Elektroden-Einheit einer DMFC eine so hohe Katalysatorbelegung resultiert, daß das ganze Verfahren unwirtschaftlich erscheint.

Aus US 5,084,144 sowie aus der Druckschrift "E.J. Taylor et al., Journal of the Electrochemical Society, Vol. 139 (1992) L45-462" ist ein elektrochemisches Beschichtungsverfahren zur Herstellung von Gasdiffusionslektroden mit dem Ziel bekannt, eine besonders niedrige Platinbelegung durch hohe Platinausnutzung zu erreichen. Dies erfolgt nach der elektrochemischen Beschichtungsmethode automatisch, da sich die Metallkeime nur dort abscheiden können, wo sich auch die elektrochemisch aktive Dreiphasengrenze befindet. Verfahrensgemäß wird zur Herstellung einer dünnen, katalytisch aktiven Schicht eine elektrolytische Abscheidung eines Katalysatormetalls aus einem Galvanikbad durchgeführt.

Nachteilig sind bei diesem Verfahren teure, edelmetallhaltige Galvanikbäder erforderlich, die zudem aufwendig und kostenintensiv aufgearbeitet werden müssen. Außerdem ist die Nutzung des im Galvanikbad gelösten Katalysatormetalls sehr beschränkt, so daß die durch optimierte Abscheidung erhaltenen Vorteile, beispielsweise durch Spülvorgänge, rückgängig gemacht werden.

Um diese Nachteile zu beseitigen, wurde in DE 197 20 688 C1 ein elektrochemisches Beschichtungsverfahren vorgeschlagen, bei dem das in einer Nafion-Lösung gelöste Metallsalz als eine Precursorschicht zwischen die Diffusionsschicht der Elektrode und die Elektrolytschicht gebracht und anschließend das Metall elektrochemisch zielgerichtet zwischen dem Elektronenleiter und dem Elektrolyten in der aktiven Dreiphasen-Zone abgeschieden wird. Vorteilhaft sind bei diesem Verfahren keine teuren Galvanikbäder erforderlich.
Die entsprechenden Reaktionsgleichungen bei Verwendung von z. B. Hexachloroplatinsäure während des Verfahrens lauten:
Arbeitselektrode(Precursor):

   H₂PtCl₆ + 4 H⁺ + 4e⁻ = Pt + 6 HCl
Gegenelektrode:

   2 H₂O = 4 H⁺ + 4e⁻ + O₂

Die prinzipielle Ausführung des Verfahrens ist in DE 197 20 688 C1 beschrieben. Da das Verfahren vor allem zur Herstellung von MEA-Elementen von Polymer-Elektrolyt-Membranen von Brennstoffzellen gedacht ist, muß dabei gewährleistet sein, daß die Membran zur Aufrechterhaltung ihrer Leitfähigkeit während des Beschichtungsverfahrens kontinuierlich mit Wasser befeuchtet wird.

Gemäß der obigen Reaktionsgleichungen wird während des Verfahrens zu einem gegebenem Zeitpunkt an einem als Arbeitselektrode geschalteten Precursor der Katalysator abgeschieden, während am Katalysator einer als Gegenelektrode geschalteten fertigen Elektrode, welche als Stromabnehmer ebenfalls am Elektrolyten anliegt, durch die Zersetzung des Wassers Sauerstoff entwickelt wird. Die elektrochemische Abscheidung des Katalysators wird durch Fließen eines Gleichstromes oder eines pulsförmigen Stromes bewirkt. Nachteilig kann sich bei diesem Verfahren eine O₂-Adsorptionsschicht ausbilden, die zu Oxidationsreaktionen am Trägermaterial der Gegenelektrode führen kann. Bei kohlenstoffhaltigen Gegenelektroden kann dies zu einem Kohlenstoffabbrand und damit zu einer nachhaltigen Schädigung der Gegenelektrode führen.

Diese Methode wurde daher bisher nur zu einer einseitigen Beschichtung der Membran mit Katalysator angewendet. Einseitige Beschichtung mit Katalysator bedeutet, daß die MEA-Membran in einem Verfahrensschritt nur von einer Seite mit dem Katalysator elektrochemisch beschichtet wird, während auf der anderen Seite der Membran die Katalysatorbeschichtung danach, das heißt in einem weiteren Verfahrensschritt und je nach Bedarf in einer beliebigen, also auch nicht elektrochemischen Weise durchgeführt wurde. Dieses Beschichtungsverfahren ist sehr zeitintensiv.

Aufgabe der Erfindung ist es, ein Verfahren zur doppelseitigen Beschichtung einer Membran-Elektroden-Einheit mit Katalysator bereit zu stellen, mit welchem die im Stand der Technik auftretenden Nachteile nicht auftreten.

Die Aufgabe wird gelöst durch ein Verfahren gemäß Hauptanspruch. Vorteilhafte Ausgestaltungen ergeben sich aus den rückbezogenen Ansprüchen.

Gemäß Hauptanspruch wird ein Verfahren zur doppelseitigen Beschichtung einer Membran-Elektroden-Einheit mit Katalysator angewendet, wobei zwei Precursorschichten mit einer Membran in Kontakt gebracht werden und eine wechselseitige elektrochemische Abscheidung von Katalysator an den Elektroden erfolgt.

Doppelseitige Beschichtung einer Membran mit Katalysator bedeutet, daß zwei Precursorschichten in Kontakt zu einer Membran stehen und die Membran in einem Verfahrensschritt von beiden Seiten mit dem Katalysator beschichtet wird.

Wechselseitige elektrochemische Abscheidung bedeutet, daß die beiden Precursorschichten alternierend als Arbeitselektrode und als Gegenelektrode geschaltet sind. An der Arbeitselektrode wird als reduktiver Prozeß Katalysator abgeschieden, an der Gegenelektrode läuft ein Oxidationsprozeß, z. B. die Bildung von Sauerstoff, ab.

Durch abwechselnd positive und negative Strompulse wechseln beide Precursorschichten in ihrer Funktion, d. h. sie werden abwechselnd als Arbeitselektrode und Gegenelektrode geschaltet. Es erfolgt somit während des Beschichtungsverfahrens eine Umpolung der Elektroden.

Durch das erfindungsgemäße Verfahren wird für beide Elektroden teurer Katalysator (Pt, Ru und andere) eingespart und gleichzeitig die Herstellungszeit verkürzt.

Vorteilhaft werden während des Verfahrens an der Gegenelektrode spezifische Adsorptionsschichten kontrolliert gebildet (Anspruch 2).
Bei der doppelseitigen Beschichtung einer Membran mit Katalysator kann im Vergleich zum einseitigen Beschichtungsverfahren ein zusätzliches Problem darin bestehen, daß die Qualität bzw. die chemische Zusammensetzung der Katalysatorbeschichtung auf jeder Seite der Membran unterschiedlich zu gestalten ist. Bei unterschiedlich langen Beschichtungszeiten, die auftreten können, wenn an der Arbeitselektrode und an der Gegenelektrode unterschiedliche Katalysatormengen abgeschieden werden sollen, kommt es regelmäßig zur Bildung von z. B. O₂-Adsorptionsschichten. Diese führen zur unkontrollierten Oxidation des Trägermaterials des Precursors. Die Gefahr der Oxidation des Trägermaterials wird dabei um so größer, je mehr Katalysator abgeschieden werden soll.
Durch die kontrollierte Bildung spezifischer Adsorptionsschichten hingegen wird die Bildung zerstörerisch wirkender Produkte während des Stromdurchganges unterbunden und die Gegenelektrode statt dessen unter kontrollierter Bildung spezifischer Adsorptionsschichten geschützt. Die nachteilige Schädigung der Membran-Elektroden-Einheit, z. B. durch einen Kohlenstoffabbrand wird so regelmäßig verhindert.

Während des elektrochemischen Abscheideverfahrens wird die Pulshöhe bis zur Bildung spezifischer Adsorptionsschichten gesteuert (Anspruch 3).
Dadurch können vorteilhaft spezifische Adsorptionsschichten mit dem Verfahren entsprechenden adsorbierbaren Zwischenprodukten (z. B. H₂O_{2(ads.)}) kontrolliert gebildet werden. Diese können weniger Oxidationskraft aufweisen als die stark oxidativ wirkenden Endprodukte der Elektrodenreaktionen (z. B. O₂-Adsorptionsschichten).
Es kann dabei dem Fachmann überlassen werden, die Einstellung der Polarität, der Pulsfrequenz und Pulsintensität durch einfache Versuche an die jeweiligen Versuchsbedingungen und Materialien anzupassen.

Durch Zugabe von Adsorbat bildenden Mitteln während des Verfahrens kann die Bildung spezifischer Adsorptionsschichten besonders gut kontrolliert werden (Anspruch 4). Hierdurch ergeben sich weitere Möglichkeiten zur kontrollierten Bildung spezifischer Adsorptionsschichten.

Als Mittel können insbesondere Gase wie CO oder H₂ vorgesehen sein (Anspruch 5). Beide Mittel sind preiswert erhältlich und bilden während der Abscheidung leicht die erwünschten Adsorptionsschichten an den Elektroden.
Vorzugsweise befindet sich die Membran-Elektroden-Einheit während des Verfahrens in einer wasserdampfhaltigen Atmosphäre (Anspruch 6). Das Verfahren eignet sich dann besonders zur Beschichtung von Polymerelektrolyt-Membranen; der Wasserpartialdruck kann z. B. im Bereich von 0.01-2.0 bar liegen.

Als Katalysator eignen sich die wasserlöslichen Salze der Metalle der vierten bis sechsten Periode des Periodensystems (Anspruch 7). Dadurch werden insbesondere auch edelmetallhaltige Salze, wie z. B. H₂PtCl₆ oder Pt(NO₃)₂, als Katalysator umfaßt.

Das erfindungsgemäße Verfahren ist, wie oben bereits ausgeführt, für die Herstellung von Brennstoffzellen besonders geeignet, bei denen die Katalysatoren an den beiden Elektroden unterschiedliche Qualität aufweisen sollen, wie z. B. in einer Direkt-Methanol-Brennstoffzelle. Ohne Einschränkung der Erfindung kann das Verfahren jedoch auch zur Herstellung von anderen Brennstoffzellentypen, wie beispielsweise einer alkaline fuel cell (AFC), einer phosphoric acid fuel cell (PAFC) oder polymer-elektrolyte-membrane fuel cell (PEMFC) herangezogen werden. Weiterhin ist mit einem solchen Verfahren auch die Herstellung von kohlenstoffhaltigen Batterien oder Akkumulatoren sowie darüber hinaus sogar von Polymer-Elektrolyt-Membran-Elektrolyseuren oder alkalischen Wasserelektrolyseuren realisierbar (Anspruch 9) .

Besonders vorteilhaft wird das Verfahren darüber hinaus auch zur Herstellung von Brennstoffzellenstapeln verwandt (Anspruch 10). Für einen Brennstoffzellenstapel ergeben sich dieselben Vorteile wie für eine einzelne Brennstoffzelle.

Im Folgenden wird die Erfindung anhand einiger Ausführungsbeispiele und der beigefügten Figur näher erläutert.

### Ausführungsbeispiel 1 (elektrochemisch gebildete Adsorbate):

Das Metallsalz (z. B. ein Platin-Salz) oder Metallsalz-Gemisch (z. B. bestehend aus einem Gemisch aus Platin-Ruthenium-Salzen) wird nach einem geeigneten Verfahren auf die Membran aufgetragen und so die Precursorschichten hergestellt. Hierzu kann folgendermaßen verfahren werden:
Vulcan XC-72 wird mit einer Nafion-Lösung versetzt, vermischt und auf zwei Teflonfolien gesprüht (Nafion-Gehalt: 21,4%). Die Schicht wird getrocknet und bei 130 °C auf eine Nafion-Membran doppelseitig gepreßt. Danach werden die Teflonfolien abgezogen. Auf die verbliebene Kohleschicht wird eine Mischung von Hexachloroplatinsäure mit Nafion gepinselt und abschließend bei 35-40 °C getrocknet.

Es werden folgende Precursorproben erhalten:

| | |
|---|---|
| Vulcan XC-72 | jeweils 1,73 mg cm⁻² |
| Platin | jeweils 1,00 mg cm⁻² |
| Pt auf Kohle | 36,63% |
| Nafion-Gehalt | 36,43% |

Die mit Platin doppelseitig beschichtete Membran wird zwischen zwei Diffusionsschichten (backing layers) angeordnet, und zwar so, daß die Precursorschichten sich jeweils auf der der backing layer zugewandten Seite befinden. Zwei Graphitnetze werden als Zuleitung auf die jeweiligen Diffusionsschichten gepreßt. Während des Beschichtungsvorgangs muß die Membran in einer dazu geeigneten Vorrichtung befeuchtet werden.
Es erfolgt anschließend eine galvanostatische Metallabscheidung mit gepulstem elektrischen Strom, wobei jede Elektrode abwechselnd jeweils zur Arbeitselektrode und Gegenelektrode gemacht wurde. An der jeweiligen Gegenelektrode wurde dabei eine vollständige Sauerstoffentwicklung nicht zugelassen. Die Pulshöhe wurde statt dessen so gesteuert, daß sich an der jeweiligen Gegenelektrode nur adsorbierte Zwischenprodukte der elektrochemischen Oxidationsreaktion (z. B. H₂O_{2(ads)}) bilden konnten (j=±200mA cm⁻²; tₚᵤₗₛ=3 ms mit wechselseitig gepulstem Strom).
Die entsprechenden Reaktionsgleichungen an den Elektroden zu einem gegebenen Zeitpunkt lauten:
Arbeitselektrode (Precursor):

   H₂PtCl₆ + 4H⁺ + 4e⁻ = Pt + 6 HCl
Gegenelektrode (Precursor):

   2 H₂O = H₂O_{2(ads)} + 2H⁺ + 2e⁻

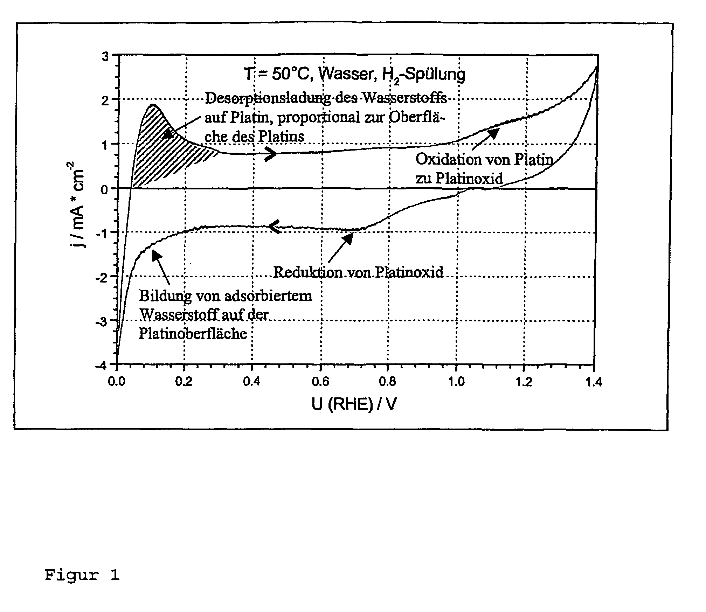

Als Ergebnis wird eine mit elektrochemisch abgeschiedenem Katalysator doppelseitig beschichtete Membran erhalten, die zur weiteren Herstellung von z. B. Brennstoffzellen eingesetzt werden können. Die Zusammensetzung der katalytisch aktiven Schicht nach der Abscheidung (metallisches Platin nachgewiesen) wird im Zyklovoltammogramm einer mit elektrochemischer Abscheidung präparierten Platinkatalysatorschicht (Fig.1) deutlich. In diesem Zyklovoltammogramm ist der für eine Platin-Belegung typische Desorptionspeak des Wasserstoffs zwischen 0 und +300 mV (NHE) deutlich zu erkennen.

### Ausführungsbeispiel 2 (zusätzlich chemisch gebildete Adsorbate):

Das Metallsalz (z. B. ein Platin-Salz) oder Metallsalz-Gemisch (z. B. bestehend aus einem Gemisch aus Platin-Ruthenium-Salzen) wird wie im Ausführungsbeispiel 1 nach einem geeigneten Verfahren auf die Membran aufgetragen. Es wird weiter wie im Ausführungsbeispiel 1 vorgegangen, nur mit dem Unterschied, daß die wasserdampfhaltige Atmosphäre geringe Konzentrationen von CO bzw. H₂ enthält. Die Konzentrationen können zwischen 0,005 und 2% für CO und 1 - 3% für H₂ liegen.
Es bilden sich CO- bzw. H-Adsorbate, die bei der gesteuerten Pulshöhe, ähnlich wie im Ausführungsbeispiel 1, eine Sauerstoffentwicklung an der Gegenelektrode nicht zulassen.
Die entsprechenden Reaktionsgleichungen lauten:
CO-Adsorbate
   Arbeitselektrode (Precursor):

   H₂PtCl₆ + 4 H⁺ + 4e⁻ = Pt + 6 HCl
Gegenelektrode (Precursor):
   Chemische Adsorbatbildung: Pt + CO = Pt-CO_{(ads)}

   Abbau: Pt-CO_{(ads)} + H₂O = Pt + CO₂ + 2 H⁺ + 2e⁻
H-Adsorbate
   Arbeitselektrode (Precursor):
   H₂PtCl₆ + 4 H⁺ + 4e⁻ = Pt + 6 HCl
   Gegenelektrode (Precursor):
   Chemische Adsorbatbildung: Pt + ½ H₂ = Pt-H_{(ads)}
   Abbau: 2 Pt-H_{(ads)} = 2 Pt + 2 H⁺ + 2e⁻

Als Ergebnis wird unter Zusatz eines Adsorbat bildenden Gases wieder eine mit elektrochemisch abgeschiedenem Katalysator doppelseitig beschichtete Membran erhalten, die zur weiteren Herstellung von z. B. Brennstoffzellen eingesetzt werden kann.

## Patentansprüche

1. Verfahren zur doppelseitigen Beschichtung einer Membran-Elektroden-Einheit mit Katalysator,
**dadurch gekennzeichnet,**
**daß** zwei Precursorschichten mit einer Membran in Kontakt gebracht werden und eine wechselseitige elektrochemische Abscheidung von Katalysator an den Elektroden erfolgt.

2. Verfahren nach Anspruch 1,
**dadurch gekennzeichnet,**
**daß** an den Elektroden spezifische Adsorptionsschichten kontrolliert gebildet werden.

3. Verfahren nach Anspruch 2,
**dadurch gekennzeichnet,**
**daß** die Pulshöhe bis zur Bildung der Adsorptionsschichten gesteuert wird.

4. Verfahren nach einem der vorhergehenden Ansprüche, **gekennzeichnet durch** Zugabe von Adsorbat bildenden Mitteln.

5. Verfahren nach vorhergehendem Anspruch,
**dadurch gekennzeichnet,**
**daß** als Mittel Gase, insbesondere CO oder H₂, vorgesehen sind.

6. Verfahren nach einem der vorhergehenden Ansprüche,
**dadurch gekennzeichnet,**
**daß** die Membran-Elektroden-Einheit sich während der Abscheidung in einer wasserdampfhaltigen Atmosphäre befindet.

7. Verfahren nach einem der vorhergehenden Ansprüche,
**dadurch gekennzeichnet,**
**daß** ein wasserlösliches Salz eines Metalls der vierten bis sechsten Periode des Periodensystems verwendet wird.

8. Verfahren nach vorhergehendem Anspruch mit H₂PtCl₆ oder Pt(NO₃)₂ als wasserlösliches Salz.

9. Verfahren zur Herstellung einer Brennstoffzelle, eines Akkumulators, einer Batterie oder eines Elektrolyseurs mit einem Verfahren nach einem der Ansprüche 1 bis 8.

10. Verfahren zur Herstellung eines Brennstoffzellenstapels mit einem Verfahren nach einem der Ansprüche 1 bis 8.

## Claims

1. Method for coating both sides of a membrane electrode assembly with a catalyst, **characterised by** the fact that both precursor layers are brought into contact with a membrane and electrochemical deposit of catalyst takes place on the electrodes on both sides.

2. Method according to claim 1, **characterised by** the fact that specific adsorption layers are formed on the electrodes in a controlled way.

3. Method according to claim 2, **characterised by** the fact that the pulse height is controlled to form adsorption layers.

4. Method according to one of the previous claims, **characterised by** the introduction of means for forming adsorbate.

5. Method according to the previous claim, **characterised by** the fact that gases, particularly CO or H₂, are provided as means.

6. Method according to one of the previous claims, **characterised by** the fact that during deposit the membrane electrode assembly is in an atmosphere containing steam.

7. Method according to one of the previous claims, **characterised by** the fact that a water-soluble salt of a metal of the fourth to sixth periods of the periodic table is used.

8. Method according to the previous claim with H₂PtCl₆ or Pt (NO₃)₂ as water-soluble salt.

9. Method for producing a fuel cell, accumulator, battery or electrolyser with a method according to one of claims 1 to 8.

10. Method for producing a fuel cell stack with a method according to one of claims 1 to 8.

## Revendications

1. Procédé de recouvrement, sur deux faces, d'un ensemble membrane - électrodes avec un catalyseur, **caractérisé en ce qu'**on applique deux couches de précurseur en contact avec une membrane et qu'on exécute un dépôt électrochimique alternatif d'un catalyseur sur les deux électrodes.

2. Procédé selon la revendication 1, **caractérisé en ce qu'**on forme d'une manière contrôlée des couches d'adsorption spécifiques sur les électrodes.

3. Procédé selon la revendication 2, **caractérisé en ce que** l'amplitude des impulsions est commandée jusqu'à la formation des couches d'adsorption.

4. Procédé selon l'une des revendications précédentes, **caractérisé par** l'addition de moyens formant un adsorbat.

5. Procédé selon la revendication précédente, **caractérisé en ce qu'**on prévoit, comme moyens, des gaz, notamment du CO ou du H₂.

6. Procédé selon l'une des revendications précédentes, **caractérisé en ce**
**que** l'unité à membrane - électrodes est située pendant le dépôt dans une atmosphère contenant de la vapeur d'eau.

7. Procédé selon l'une des revendications précédentes, **caractérisé en ce qu'**on utilise un sel soluble à l'eau d'un métal faisant partie des quatrième à sixième périodes du système périodique.

8. Procédé selon la revendication précédente, comportant, en tant que sel soluble à l'eau, du H₂PtCl₆ ou Pt(NO₃)₂.

9. Procédé pour fabriquer une pile à combustible, un accumulateur, une pile ou un électrolyseur avec un procédé selon l'une des revendications 1 à 8.

10. Procédé pour fabriquer un empilage de piles à combustible avec un procédé selon l'une des revendications 1 à 8.
